# EUROPEAN PATENT SPECIFICATION

(11) **EP 2 921 720 B1**
(45) Date of publication and mention of the grant of the patent: **19.08.2020**
(21) Application number: 15159528.7
(22) Date of filing: 17.03.2015
(51) Int. Cl.: F16B 2/18, E03D 11/14

(54) **QUICK FASTENING DEVICE FOR FASTENING COMPONENTS AND ACCESSORIES ON A SUPPORT FRAME OF SANITARY APPLIANCES, AND INSTALLATION STRUCTURE COMPRISING A FASTENING DEVICE**
SCHNELLVERSCHLUSSVORRICHTUNG ZUM BEFESTIGEN VON KOMPONENTEN UND ZUBEHÖRTEILEN AUF EINEM STÜTZRAHMEN SANITÄRER ANLAGEN, UND EINE INSTALLATIONSVORRICHTUNG MIT EINER SCHNELLVERSCHLUSSVORRICHTUNG
DISPOSITIF DE FIXATION POUR LA FIXATION DE COMPOSANTS ET ACCESSOIRES SUR UN CHÂSSIS DE SUPPORT D'APPAREILS SANITAIRES, ET UNE STRUCTURE D'INSTALLATION AVEC UN DISPOSITIF DE FIXATION

(30) Priority: 17.03.2014 IT MI20140437
(43) Date of publication of application: 23.09.2015
(73) Proprietor: VALSIR S.p.A., 25078 Vestone (BS) (IT)
(72) Inventor: Varotti, Mario, 25078 Vestone (IT); Frigo, Flavio, 31050 Ponzano Veneto (IT)
(74) Representative: Cernuzzi, Daniele

(56) References cited:
- DE-A1- 3 628 911
- FR-A- 1 602 537
- US-A- 4 791 767

## Description

The present invention relates to a quick fastening device for fastening components and accessories on a support frame, particularly for creating equipped walls, and it also relates to an installation structure provided with a fastening device.

The fastening device according to the invention is particularly (but not only) arranged for fastening an installation structure of a flushing tank and a support frame, possibly forming part of an equipped wall.

Use of equipped walls is increasingly frequent in the field of sanitary appliances installation, additional to the structure of the building, which allows a bathroom to be fitted out quickly, practically and cleanly.

Various systems are known which allow the installer to create equipped walls comprising support frames onto which the sanitary appliances and related components are fastened.

For example, DE3628911A discloses a quick fastening device for clamping a carrying rail on a fastening part; the fastening part comprises a bushing having a hooking tooth shaped so as to hook a longitudinal edge of the rail; and a locking member which is mounted pivotably on the bushing and has a control rod and a cam which, in the clamping position, is pushed by the bushing against the rail for engaging the bar, clamping the bar between the cam and the hooking tooth .

Also US4791767A and FR1602537A disclose similar fastening devices with a cam portion.

However, the known systems have several inconveniences, particularly as far as concerns attachment of the various components to the bars which form the support frame. For example, the known systems may:
- be relatively complicated to create, not very versatile and formed of a large number of components;
- require lengthy assembly times and difficult assembly operations and/or use of tools;
- not be very ergonomic, requiring the installer to make difficult and/or unnatural movements;
- in certain cases, at least for assembly of some components, the work of two people may be necessary;
- sometimes not allow precise adjustment of the distances between the bars and/or other components, or recovery of any clearance.

One object of the present invention is providing a quick fastening device for fastening components and accessories on a support frame of sanitary appliances, particularly for the creation of equipped walls, which does not have the aforesaid inconveniences of the prior art. It is also an object to provide a quick fastening device having more stability in use.

The present invention therefore relates to a quick fastening device for fastening components and accessories on a support frame of sanitary appliances, particularly for the creation of equipped walls, as defined in simple terms in the appended claim 1 and, in its additional features, in the dependent claims. Claim 6 defines an installation structure comprising a fastening device with the same principles as presented in claim 1.

The fastening device of the invention is simple and economic to manufacture, and simple, quick and efficient to use. Further characteristics and advantages of the present invention will become apparent from the description of the following non-limiting examples of embodiments, with reference to the appended drawings, wherein:
- Figure 1 is a perspective view of a quick fastening device for fastening components and accessories on a support frame of sanitary appliances according to the invention;
- Figure 2 is an exploded perspective view of the fastening device of figure 1, shown together with a bar of a support frame;
- Figures 3-5 are perspective views of the fastening device of the invention, applied to a leg of an installation structure of a flushing tank and shown in the various stages of assembly;
- Figures 6-7 are perspective views of an installation structure of a flushing tank provided with a pair of fastening devices according to the invention, for fastening to a horizontal bar of a support frame;
- Figure 8 is a perspective view of an installation structure for a flushing tank provided with a pair of fastening devices according to the invention, for fastening of the installation structure to respective vertical bars of a support frame;
- Figure 9 is an enlarged perspective view of a detail of the installation structure of figure 8 and the related fastening device;
- Figures 10-11 are, respectively, a perspective view from above and a perspective view from below, with parts removed for clarity, of an alternative embodiment of a locking element according to the invention.

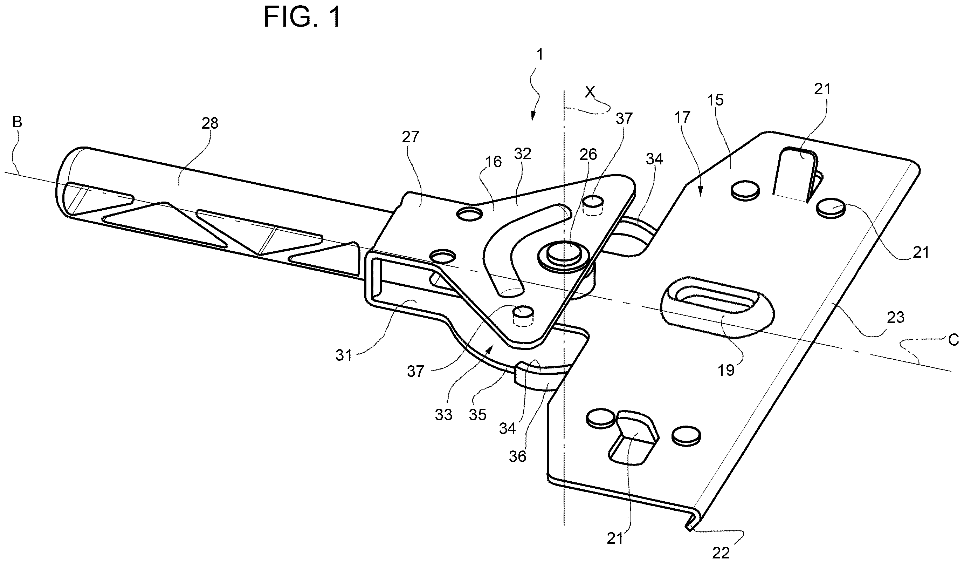

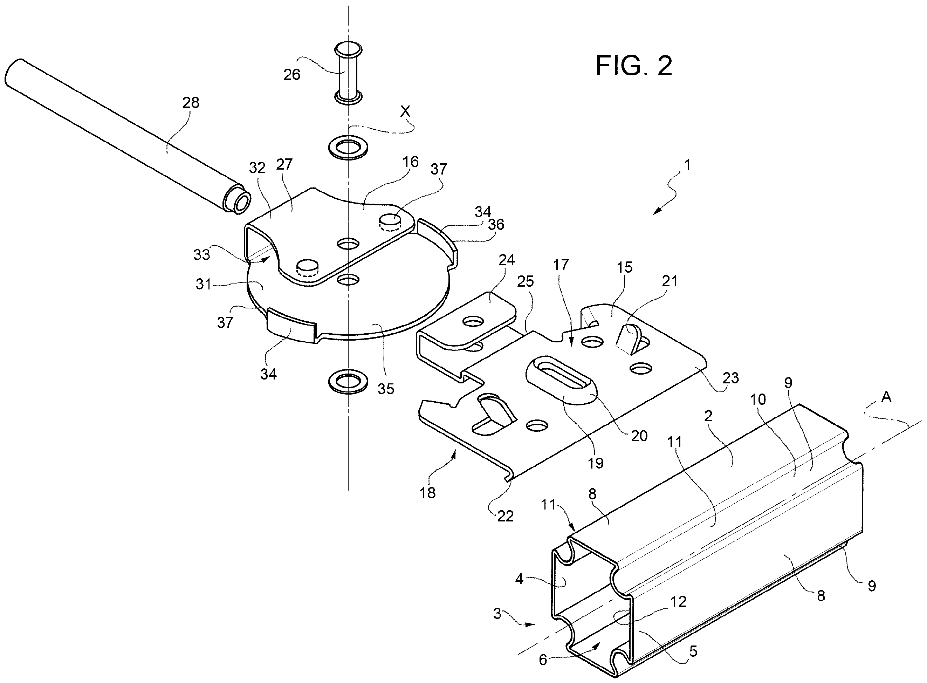

In figures 1 and 2, the number 1 denotes a quick fastening device for fastening components and accessories on a support frame of sanitary appliances, particularly for the creation of equipped walls, and specifically on a bar 2 of the frame.

The frame is formed, in particular, by profiled tubular bars, for example (but not necessarily) made of metal, particularly steel.

As visible in figure 2, each bar 2 (of which only a segment is shown) extends along a longitudinal axis A between two axially opposite open ends 3, provided with respective openings 4 delimited by respective closed front edges 5, and is formed of an internally hollow tubular section bar with a closed transversal cross section, cross-shaped. Each bar has an internal longitudinal cavity 6, accessible through the openings 4.

The bar 2 has two pairs of side walls 8 arranged as the sides of a square; the side walls 8 of each pair are facing and parallel to each other, and are perpendicular to the side walls 8 of the other pair.

The bar 2 has four recessed edges 9, arranged between two adjacent side walls 8 defined by respective outer longitudinal channels, parallel to axis A and having a curved transversal cross section.

Each lateral wall 8 therefore has two opposite longitudinal edges 11, parallel to axis A.

Internally, the bar 2 has four inner channels 12, each of which is delimited by a lateral wall 8 of the bar 2 and by a pair of edges 9.

The fastening device 1 comprises a coupling plate 15 and a locking element 16 rotating with respect to the plate 15.

The plate 15 has two opposite faces 17, 18, substantially flat and parallel.

The face 17 has a central projection 19 projecting from the face 17 and delimited by a perimeter collar 20; and opposite lateral end teeth 21, positioned at respective opposite lateral ends of the coupling plate 15 and protruding from the face 17; in the example shown, each lateral end of the plate 15 has a group of teeth 21, and specifically: a central tooth 21, defined by a portion of the plate 15 cut and bent with respect to the plate 15, and two lateral teeth 21, substantially aligned with the central tooth 21 and also projecting from the face 17.

The plate 15 is provided with a hooking tooth 22 which projects from the plate in an opposite direction to the projection 19 and the teeth 21; in particular, the tooth 22 projects from a free end edge 23 of the plate 15 and projects from the face 18.

The tooth 22 is shaped so as to hook a first longitudinal edge 11 of a lateral wall 8 of a bar 2.

In the non-limiting embodiment shown, the tooth 22 is elongated along the entire edge 23, but it is understood that there may be several teeth 22 laterally alongside each other along the edge 23.

The plate 15 has a connection portion 24 which extends from an edge 25 opposite to the edge 23 and is hinged by means of a pin 26 to the locking element 16.

The locking element 16 is rotatable with respect to the plate 15 around a rotation axis X defined by the pin 26 and substantially perpendicular to the plate 15.

The locking element 16 comprises a base body 27, hinged to the coupling portion 24 of the plate 15 by means of the pin 26, and a control rod 28.

The base body 27 is C-shaped along the axis X and has two opposite arms 31, 32, facing each other and spaced along the axis X and defining a compartment 33. The arms 31, 32 are axially positioned beyond respective faces 17, 18 of the plate 15 (i.e. the plate 15 is axially positioned between the arms 31, 32).

The arm 31 has at least one cam 34 projecting radially from a perimeter edge 35 of the arm 31.

Preferably, the cam 34 has a curved peripheral contact edge 36, with a variable curving radius.

In the example shown in figures 1 and 2, the arm 32 has two cams 34 symmetrical with respect to a longitudinal middle axis B (perpendicular to the axis X) of the locking element 16 and the base body 27.

The arm 32 has a pair of pre-assembly teeth 37, which project from an inner face (turned towards the arm 31) of the arm 33 in the compartment 33 and towards the arm 31.

The two teeth 37 are positioned symmetrical with respect to the axis B at respective opposite lateral ends of the arm 32.

The control rod 28 projects along the axis B from an end of the base body 27 and is fastened to the base body 27.
The fastening device 1 is attachable to the bar 2, to fasten a generic component to the bar 2, in the following manner.

By means of rotation of the control rod 28 around the axis X, the fastening device 1 assumes two operating configurations with respect to the bar 2 to be attached:
- a rest configuration, in which: the control rod 28 is substantially perpendicular to the edge 23 and to the hooking tooth 22 (i.e. the axis B of the locking element 16, along which the control rod 28 extends, is aligned to a longitudinal middle axis C, perpendicular to the axis X, of the plate 15); the cams 34 are at the maximum distance from the tooth 22, so as to allow assembly of the plate 15 on a lateral wall 8 of the bar 2, hooking a first longitudinal edge 11 of the lateral wall 8 with the tooth 22 and a second longitudinal edge 11 (opposite the first longitudinal edge 11 engaged by the tooth 22) of said lateral wall 8 being free;
- a locking configuration, in which: the control rod 28 is substantially parallel to the edge 23 and to the hooking tooth 22 (i.e. the axis B is substantially perpendicular to the axis C); a cam 34 is at the minimum distance from the tooth 22 and engages the second longitudinal edge 11 of the lateral wall 8 of the bar 2, so as to clamp the lateral wall 8 between the tooth 22 and the cam 34.

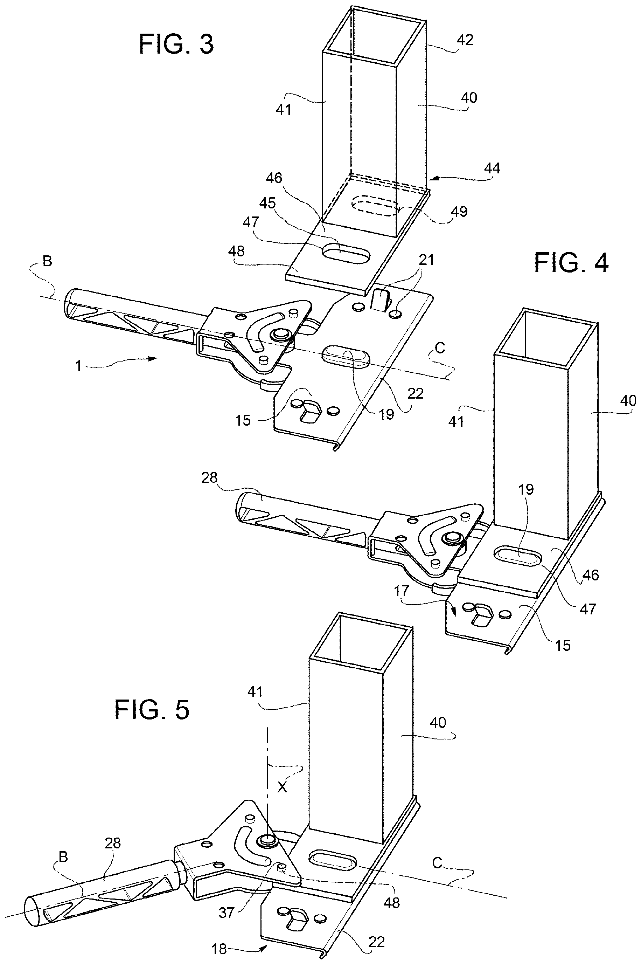

The pre-assembly teeth 37 serve to pre-assemble the fastening device 1 onto a component 40 to be fastened to the bar 2, as shown in figures 3-7, where the component 40 is, for example, a leg 41 of an installation structure 42 of a sanitary appliance and specifically a flushing tank.

In fact, the fastening device 1 has a preferred application, for example, to fasten an installation structure 42 of a sanitary appliance, and specifically a flushing tank, to a support frame 43, possibly forming part of an equipped wall.

In the example of figures 3-7, two fastening devices 1 are used to fasten the installation structure 42, by means of its respective legs 41, onto a horizontal bar 2 of the frame 43.

Each leg 41 (figure 3) has a lower free end 44 provided with a supporting foot 45, defined by a transversal plate 46 which projects laterally from the end 44.

Each foot 45 has a through-hole 47 (for example, in the shape of an elongated loop) positioned in a central zone of the plate 46, and at least one peripheral pre-assembly seat 48 positioned in proximity to a corner of the plate 46.

The end 44 of the leg 41 is open and/or has at least one opening 49; in the example shown, the opening 49 has a similar or identical shape to the hole 47 and is therefore shaped like an elongated loop.

Also by means of rotation of the control rod 28 around the axis X, the fastening device 1 assumes a further operating configuration (figure 5), intermediate between the rest configuration and the locking configuration, and precisely:
- a pre-assembly configuration, in which: the control rod 28 is rotated (inclined), for example (but not necessarily) by around 45°, with respect to the plate 15 and, in particular, the edge 23 (i.e. the axis B is inclined with respect to the axis C); a cam 34 is closer to the tooth 22 with respect to the rest configuration, but still spaced from the tooth 22 to a sufficient extent to allow assembly of the plate 15 on the bar 2 (i.e. the cam 34 still is not engaging the longitudinal edge 11 of the lateral wall 8 opposite the longitudinal edge 11 of said lateral wall 8 engaged by the tooth 22); a pre-assembly tooth 37 engages the pre-assembly seat 48 of the component 40 (whereas in the rest configuration, the pre-assembly teeth do not engage any seats of the component 40 to be fastened to the bar 2).

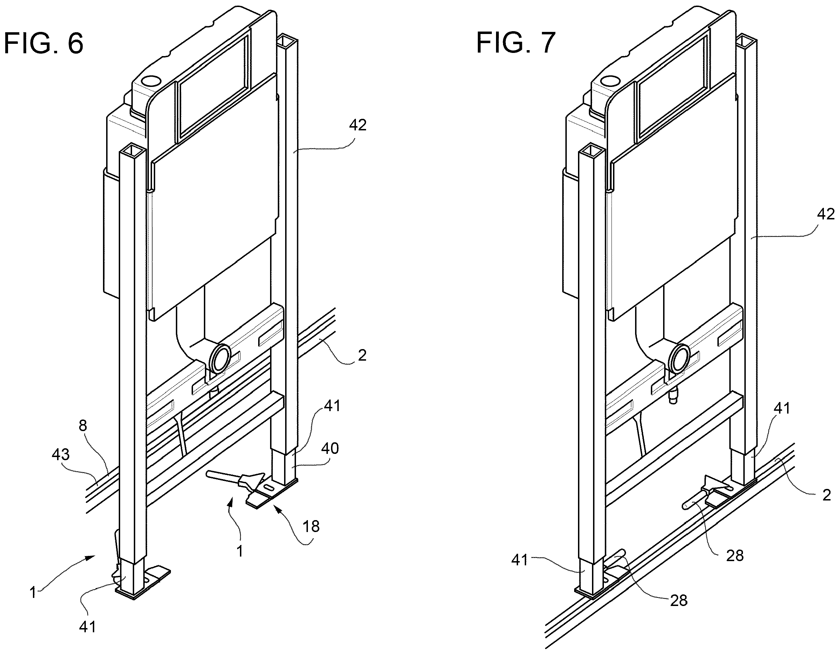

Advantageously, use of the fastening device 1 includes the following operations:
- bringing the fastening device 1 (in its assembly configuration) closer (figure 3) to a leg 41 of the installation structure 42;
- arranging (figure 4) the plate 46 on the face 17 of the plate 15 of the fastening device 1, engaging the hole 47 with the projection 19 of the fastening device 1 and the opening 49 with a group of teeth 21;
- rotating (figure 5) the control rod 28 of the fastening device 1 by about 45°, bringing a pre-assembly tooth 37 to engage the pre-assembly seat 48; at this point, the fastening device 1 is attached to the component 40 (i.e. to the leg 41 and therefore to the installation structure 42);
- repeating the above operations for the other leg 41, with another fastening device 1;
- bringing (figure 6) the installation structure 42, provided with two fastening devices 1 pre-assembled onto the respective legs 41, onto the horizontal (lower) bar 2 of the frame 43, resting the face 18 of the plate 15 of the fastening device 1 on a lateral (upper) wall 8 of the bar 2;
- connecting the bar 2, specifically a first longitudinal edge 11 of the lateral wall, by means of the hooking tooth 22 of each fastening device 1;
- positioning the installation structure 42 on the bar 2 in the desired position;
- completing rotation of the control rods 28 of the two fastening devices 1, for example by rotating them by a further 45°; in each fastening device 1, a cam 34 engages a second longitudinal edge 11 of the lateral wall 8 of the bar 2 and presses against said second longitudinal edge 11, thus clamping the lateral wall 8 of the bar 2 between the hooking tooth 22 and the cam 34. The pre-assembly tooth 37 protrudes from the pre-assembly seat 48 and rotates on an upper surface of the plate 46 of the foot 45, pressing the plate 46 against the face 17 of the plate 15 of the fastening device 1.

Positioning of the fastening device 1 is an easy and rapid operation thanks to the pre-assembly tooth 37.

Positioning and horizontal adjustment of the component 40 (and therefore the installation structure 42) along the bar 2 is simple and rapid.

Use of the fastening device 1 is entirely manual, since no tools are necessary, and may be performed by a single operator.

In the example described above, the fastening device 1 is attachable to a bar 2 and to a component 40 which is a detached piece with respect to the fastening device 1.

A fastening device 1 may also be a part of the component 40.

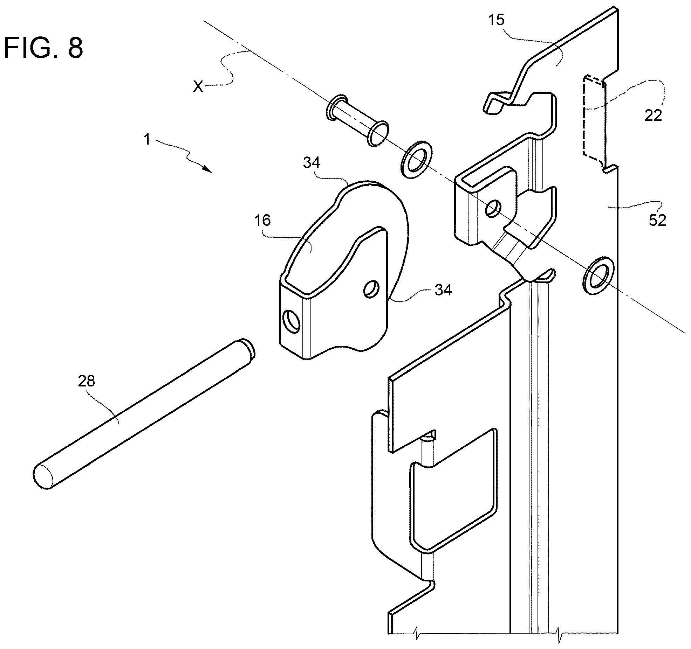

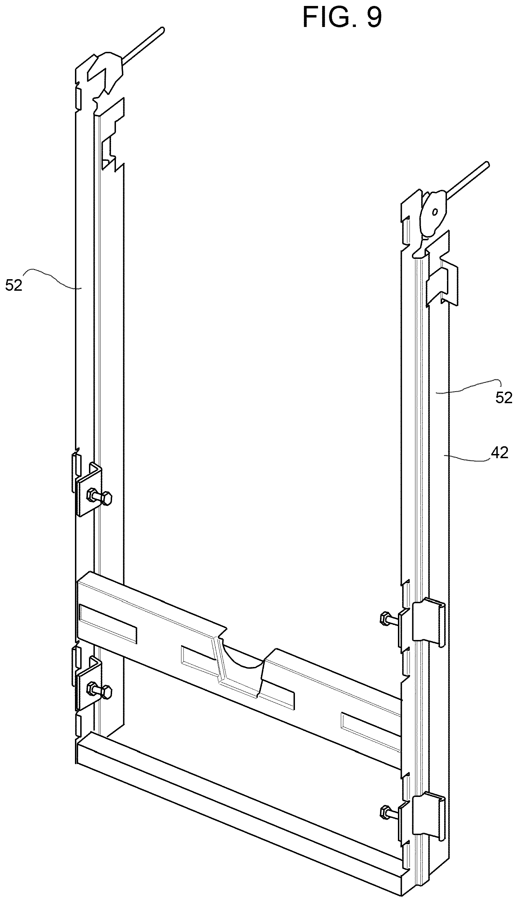

For example, figures 8-9 show application of the fastening device 1 to connect an installation structure 42 for a flushing tank to the vertical bars 2 of a frame (not shown).

The fastening device 1 always comprises the coupling plate 15 and the locking element 16 rotating with respect to the plate 15.

The plate 15 consists of a portion of a lateral upright 52 of the installation structure 42.

In other words, the plate 15 is integral with the installation structure 42 and specifically with the upright 52.

Neither the projection 19 nor the teeth 21 are therefore necessary.

The plate 15, on the other hand, is still provided with at least one hooking tooth 22, which projects laterally from the plate 15 outside the installation structure 42 and is shaped to hook a longitudinal edge 11 of a lateral wall 8 of a bar 2. The locking element 16 is entirely similar to the one described above, since it is provided, in particular, with the cam 34 (or the cams 34).

Assembly and positioning of the installation structure 42 is an easy and rapid operation in this case as well, thanks to the fastening devices 1 arranged on the two uprights 52 of the installation structure 42.

The fastening devices 1 allow approach of the installation structure 42 to the vertical bars 2 of the frame, simple attachment on the side, rapid vertical positioning thanks to the action of the cam 34, which allows the installation structure 42 to be blocked in height.

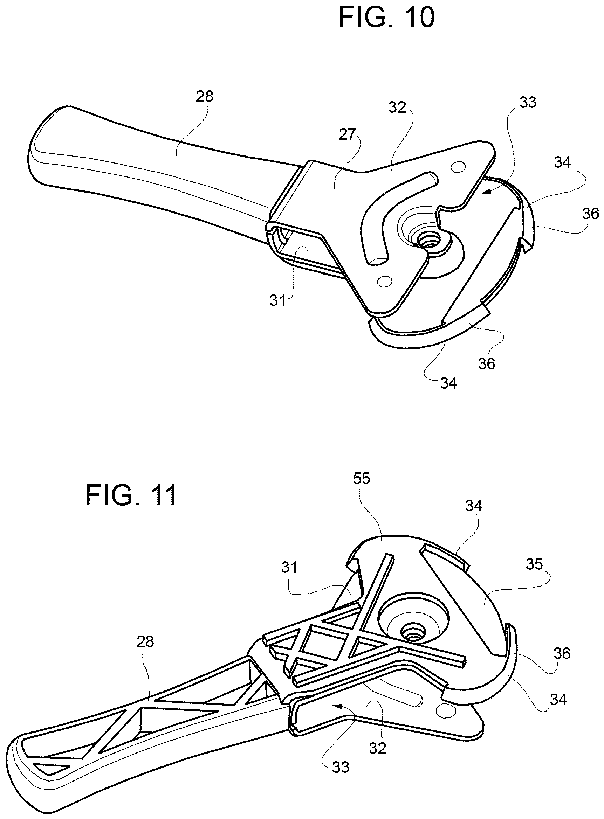

In the alternative locking element 16 shown in figures 10 and 11, in order to avoid or reduce dragging by the cams 34, of the surfaces engaged by the cams 34 (a problem which may occur, in particular, if the cams and the bars which the cams engage are made of metal), the cams 34 and/or their edges 36 are provided with appropriate anti-dragging mechanisms.

In particular, the cams, rather than being made of metal, are made of or coated with a polymer material.

In greater detail, the device 1 comprises a polymer material hood 55 which extends beyond the perimeter edge 35 of the arm 31 and forms or covers the cams 34 and/or at least the edges 36 of the cams 34.

In the non-limiting embodiment shown in figures 10, 11, the hood 55 extends from the control rod 28, being integral with the control rod 28, and covers at least partially the arm 31 and, specifically, an outer face, opposite the compartment 33, of the arm 31.

In a further variant not shown, the edges 36 of the cams 34 are provided with rollers rotating around respective axes parallel to the axis X.

It is finally clear that changes and variants may be made to the fastening device described and shown here without deviating from the area of the appended claims.

## Claims

1. A quick fastening device (1) for fastening components and accessories on a support frame of sanitary appliances, comprising a coupling plate (15), attached in an assembled state with the support frame or attachable to a component (40) and provided with a hooking tooth (22) projecting from the coupling plate (15) and shaped so as to hook a first longitudinal edge (11) of a bar (2) of a frame (43); the fastening device further comprising a locking element (16) comprising a base body (27) hinged to the coupling plate (15) and rotating with respect to the coupling plate (15) about a rotation axis (X) substantially perpendicular to the coupling plate (15) ; the locking element (16) further comprising a control rod (28) projecting from the base body (27) wherein the base body (27) is provided with at least one cam (34) protruding radially from a peripheral edge (35) of the base body (27) and facing the hooking tooth (22); the cam (34) being shaped so as to assume, by rotation of the locking element (16), a locking position in which the cam (34) engages the bar (2) arranged between the cam (34) and the hooking tooth (22), clamping the bar (2) between the cam (34) and the hooking tooth (22); the fastening device (1) being **characterized in that** the base body (27) is C-shaped along the rotation axis (X) and has two opposite arms (31, 32) facing each other and spaced along the rotation axis (X); the arms (31, 32) being positioned axially beyond respective opposite, substantially flat and parallel faces (17, 18) of the coupling plate (15), so that the coupling plate (15) is axially positioned between the arms (31, 32).

2. The fastening device according to claim 1, wherein the locking element (16) rotates with respect to the coupling plate (15) to assume selectively: a rest configuration, in which the cam (34) is spaced from the hooking tooth (22) so as to allow the coupling plate (15) to be mounted on a bar (2); and a locking configuration, wherein the cam (34) is close to the hooking tooth (22) for clamping the bar (2) between the cam (34) and the hooking tooth (22).

3. The fastening device according to one of the preceding claims, wherein the locking element (16) has two cams (34) symmetrical with respect to a longitudinal middle axis (B) of the locking element (16).

4. The fastening device according to one of the preceding claims, wherein the coupling plate (15) has a first face (17) provided with a central projection (19), projecting from the first face (17), and with opposite lateral end teeth (21), positioned at respective opposite lateral ends of the coupling plate (15) and protruding from the first face (17); and wherein the hooking tooth (22) projects from the coupling plate (15) in a direction opposite to the projection (19) and to the end teeth (21).

5. The fastening device according to one of the preceding claims, wherein the locking element (16) has at least one pre-assembly tooth (37), projecting from the locking element (16) to engage a pre-assembly seat (48) formed on a component (40) to be fastened onto the bar (2).

6. An installation structure (42) for a flushing tank, the structure being provided with a fastening device (1) for fastening the installation structure (42) to vertical bars (2) of a support frame (43), wherein the fastening device (1) comprises a coupling plate (15) provided with a hooking tooth (22) projecting laterally from the coupling plate (15) and shaped so as to hook a first longitudinal edge (11) of a bar of the frame (43), the fastening device further comprising a locking element (16) comprising a base body (27) hinged to the coupling plate (15) and rotating with respect to the coupling plate (15) about a rotation axis (X) substantially perpendicular to the coupling plate (15), the locking element (16) further comprising a control rod (28) projecting from the base body (27) wherein the base body (27)is provided with at least one cam (34) protruding radially from a peripheral edge(35) of the base body (27) and facing the hooking tooth (22) wherein the cam (34) is shaped so as to assume, by rotation of the locking element (16), a locking position in which the cam (34) engages the bar (2) arranged between the cam (34) and the hooking tooth (22) thereby clamping the bar (2) between the cam (34) and the hooking tooth (22), **characterised in that** the base body (27) is C-shaped along the rotation axis (X) and has two opposite arms (31, 32) facing each other and spaced along the rotation axis (X),the arms (31, 32) being positioned axially beyond respective opposite, substantially flat and parallel faces (17, 18) of the coupling plate (15), so that the coupling plate (15) is axially positioned between the arms (31, 32), and **in that** the coupling plate (15) consists of a portion of a lateral upright (52) of the installation structure (42).

## Patentansprüche

1. Schnellbefestigungsvorrichtung (1) zum Befestigen von Komponenten und Zubehör an einem Stütz- bzw. Trägerrahmen von Sanitäreinrichtungen, umfassend eine Kopplungsplatte (15), die in einem montierten bzw. zusammengebautem Zustand mit dem Stützrahmen angebracht oder an einer Komponente (40) anbringbar ist und mit einem Hakenzahn (22) versehen ist, der von der Kopplungsplatte (15) vorsteht und so geformt ist, dass er eine erste Längskante (11) einer Stange (2) eines Rahmens (43) einhakt; wobei die Befestigungsvorrichtung umfasst ferner:
ein Verriegelungselement (16), das einen Basiskörper (27) umfasst, der an der Kopplungsplatte (15) angelenkt ist und sich in Bezug auf die Kopplungsplatte (15) um eine Drehachse (X) dreht, die im Wesentlichen senkrecht zu der Kopplungsplatte (15) ist; wobei das Verriegelungselement ferner umfasst:
eine Steuerstange (28), die von dem Basiskörper (27) vorsteht, wobei der Basiskörper (27) mit zumindest einem Nocken (34) versehen ist, der radial von einer Umfangskante (35) des Basiskörpers (27) vorsteht und dem Hakenzahn (22) zugewandt ist; wobei der Nocken (34) so geformt ist, dass er durch Drehung des Verriegelungselements (16) eine Verriegelungsposition einnimmt, in der der Nocken (34) in die zwischen dem Nocken (34) und dem Hakenzahn (22) angeordnete Stange (2) eingreift, wobei die Stange (2) zwischen den Nocken (34) und den Hakenzahn (22) geklemmt wird;
wobei die Befestigungsvorrichtung (1) **dadurch gekennzeichnet ist, dass** der Basiskörper (27) entlang der Rotationsachse (X) C-förmig ist und zwei gegenüberliegende bzw. entgegengesetzte Arme (31, 32) aufweist, die einander zugewandt sind und entlang der Rotationsachse (X) beabstandet sind; wobei die Arme (31, 32) axial jenseits jeweiliger gegenüberliegender bzw. entgegengesetzter, im Wesentlichen flacher und paralleler Flächen (17, 18) der Kopplungsplatte (15) positioniert sind, so dass die Kopplungsplatte (15) axial zwischen den Armen (31, 32) positioniert ist.

2. Befestigungsvorrichtung nach Anspruch 1, wobei sich das Verriegelungselement (16) in Bezug auf die Kopplungsplatte (15) dreht, um selektiv einzunehmen: eine Ruhekonfiguration, in der der Nocken (34) von dem Hakenzahn (22) beabstandet ist, damit die Kopplungsplatte (15) an einer Stange (2) montiert werden kann; und eine Verriegelungskonfiguration, wobei der Nocken (34) nahe an dem Hakenzahn (22) ist, um die Stange (2) zwischen den Nocken (34) und den Hakenzahn (22) zu klemmen.

3. Befestigungsvorrichtung nach einem der vorhergehenden Ansprüche, wobei das Verriegelungselement (16) zwei Nocken (34) aufweist, die in Bezug auf eine Längsmittelachse (B) des Verriegelungselements (16) symmetrisch sind.

4. Befestigungsvorrichtung nach einem der vorhergehenden Ansprüche, wobei die Kopplungsplatte (15) eine erste Fläche (17) aufweist, die mit einem zentralen Vorsprung (19), der von der ersten Fläche (17) vorsteht, und mit gegenüberliegenden bzw. entgegengesetzten lateralen Endzähnen (21) versehen ist, die an jeweiligen gegenüberliegenden bzw. entgegengesetzten lateralen Enden der Kopplungsplatte (15) positioniert sind und von der ersten Fläche (17) vorstehen; und wobei der Hakenzahn (22) von der Kopplungsplatte (15) in einer Richtung vorsteht, die dem Vorsprung (19) und den Endzähnen (21) entgegengesetzt ist.

5. Befestigungsvorrichtung nach einem der vorhergehenden Ansprüche, wobei das Verriegelungselement (16) zumindest einen Vormontagezahn (37) aufweist, der von dem Verriegelungselement (16) vorsteht, um in einen Vormontagesitz (48) einzugreifen, der an einer Komponente (40) gebildet ist, die an der Stange (2) befestigt werden soll.

6. Installationsstruktur (42) für einen Spültank, wobei die Struktur mit einer Befestigungsvorrichtung (1) zum Befestigen der Installationsstruktur (42) an vertikalen Stangen (2) eines Stütz- bzw. Trägerrahmens (43) versehen ist, wobei die Befestigungsvorrichtung (1) eine Kopplungsplatte (15) umfasst, die mit einem Hakenzahn (22) versehen ist, der lateral von der Kopplungsplatte (15) vorsteht und so geformt ist, dass er eine erste Längskante (11) einer Stange (2) des Rahmens (43) einhakt, wobei die Befestigungsvorrichtung ferner ein Verriegelungselement (16) umfasst, das einen Basiskörper (27) umfasst, der an der Kopplungsplatte (15) angelenkt ist und sich in Bezug auf die Kopplungsplatte (15) um eine Drehachse (X) dreht, die im Wesentlichen senkrecht zu der Kopplungsplatte (15) ist; wobei das Verriegelungselement ferner eine Steuerstange (28) umfasst, die von dem Basiskörper (27) vorsteht, wobei der Basiskörper (27) mit zumindest einem Nocken (34) versehen ist, der radial von einer Umfangskante (35) des Basiskörpers (27) vorsteht und dem Hakenzahn (22) zugewandt ist, wobei der Nocken (34) so geformt ist, dass er durch Drehung des Verriegelungselements (16) eine Verriegelungsposition einnimmt, in der der Nocken (34) in die zwischen dem Nocken (34) und dem Hakenzahn (22) angeordnete Stange (2) eingreift, wobei die Stange (2) zwischen den Nocken (34) und den Hakenzahn (22) geklemmt wird,
**dadurch gekennzeichnet, dass** der Basiskörper (27) entlang der Rotationsachse (X) C-förmig ist und zwei gegenüberliegende bzw. entgegengesetzte Arme (31, 32) aufweist, die einander zugewandt sind und entlang der Rotationsachse (X) beabstandet sind, wobei die Arme (31, 32) axial jenseits jeweiliger gegenüberliegender bzw. entgegengesetzter, im Wesentlichen flacher und paralleler Flächen (17, 18) der Kopplungsplatte (15) positioniert sind, so dass die Kopplungsplatte (15) axial zwischen den Armen (31, 32) positioniert ist, und dadurch, dass die Kopplungsplatte (15) aus einem Abschnitt eines lateralen Pfostens (52) der Installationsstruktur (42) besteht.

## Revendications

1. Dispositif de fixation rapide (1) pour fixer des composants et des accessoires sur un bâti de support d'appareils sanitaires, comprenant une plaque de couplage (15) fixée dans un état assemblé avec le bâti de support ou pouvant être fixée sur un composant (40) et prévue avec une dent d'accrochage (22) faisant saillie de la plaque de couplage (15) et formée afin d'accrocher un premier bord longitudinal (11) d'une barre (2) d'un bâti (43) ; le dispositif de fixation comprenant en outre :
un élément de verrouillage (16) comprenant un corps de base (27) articulé par rapport à la plaque de couplage (15) et tournant par rapport à la plaque de couplage (15) autour d'un axe de rotation (X) sensiblement perpendiculaire à la plaque de couplage (15) ; l'élément de verrouillage (16) comprenant en outre :
une tige de commande (28) faisant saillie du corps de base (27), dans lequel le corps de base (27) est prévu avec au moins une came (34) faisant radialement saillie d'un bord périphérique (35) du corps de base (27) et faisant face à la dent d'accrochage (22) ; la came (34) étant formée afin d'adopter, par la rotation de l'élément de verrouillage (16), une position de verrouillage dans laquelle la came (34) met en prise la barre (2) agencée entre la came (34) et la dent d'accrochage (22), serrant la barre (2) entre la came (34) et la dent d'accrochage (22) ; le dispositif de fixation (1) étant **caractérisé en ce que** le corps de base (27) est en forme de C le long de l'axe de rotation (X) et a deux bras (31, 32) opposés se faisant face et espacés le long de l'axe de rotation (X) ; les bras (31, 32) étant positionnés axialement au-delà des faces (17, 18) respectives opposées, sensiblement plates et parallèles de la plaque de couplage (15), de sorte que la plaque de couplage (15) est axialement positionnée entre les bras (31, 32).

2. Dispositif de fixation selon la revendication 1, dans lequel l'élément de verrouillage (16) tourne par rapport à la plaque de couplage (15) afin d'adopter sélectivement : une configuration de repos dans laquelle la came (34) est espacée de la dent d'accrochage (22) afin de permettre de monter la plaque de couplage (15) sur une barre (2) ; et une configuration de verrouillage, dans laquelle la came (34) est à proximité de la dent d'accrochage (22) pour serrer la barre (2) entre la came (34) et la dent d'accrochage (22).

3. Dispositif de fixation selon l'une des revendications précédentes, dans lequel l'élément de verrouillage (16) a deux cames (34) cylindriques par rapport à un axe central longitudinal (B) de l'élément de verrouillage (16).

4. Dispositif de fixation selon l'une des revendications précédentes, dans lequel la plaque de couplage (15) a une première face (17) prévue avec une saillie centrale (19), faisant saillie de la première face (17), et avec des dents d'extrémité latérales (21) opposées, positionnées au niveau des extrémités latérales respectives opposées de la plaque de couplage (15) et faisant saillie de la première face (17) ; et dans lequel la dent d'accrochage (22) fait saillie de la plaque de couplage (15) dans une direction opposée à la saillie (19) et aux dents d'extrémité (21).

5. Dispositif de fixation selon l'une des revendications précédentes, dans lequel l'élément de verrouillage (16) a au moins une dent de pré-assemblage (37), faisant saillie de l'élément de verrouillage (16) pour mettre en prise un siège de pré-assemblage (48) formé sur un composant (40) à fixer sur la barre (2).

6. Structure d'installation (42) pour un réservoir de chasse d'eau, la structure étant prévue avec un dispositif de fixation (1) pour fixer la structure d'installation (42) sur des barres verticales (2) d'un bâti de support (43), dans laquelle le dispositif de fixation (1) comprend une plaque de couplage (15) prévue avec une dent d'accrochage (22) faisant saillie latéralement de la plaque de couplage (15) et formée afin d'accrocher un premier bord longitudinal (11) d'une barre du bâti (43), le dispositif de fixation comprenant en outre un élément de verrouillage (16) comprenant un corps de base (27) articulé par rapport à la plaque de couplage (15) et tournant par rapport à la plaque de couplage (15) autour d'un axe de rotation (X) sensiblement perpendiculaire à la plaque de couplage (15), l'élément de verrouillage (16) comprenant en outre une tige de commande (28) faisant saillie du corps de base (27), dans laquelle le corps de base (27) est prévu avec au moins une came (34) faisant radialement saillie d'un bord périphérique (35) du corps de base (27) et faisant face à la dent d'accrochage (22), dans laquelle la came (34) est formée pour adopter, par la rotation de l'élément de verrouillage (16), une position de verrouillage dans laquelle la came (34) met en prise la barre (2) agencée entre la came (34) et la dent d'accrochage (22), serrant ainsi la barre (2) entre la came (34) et la dent d'accrochage (22), **caractérisée en ce que** le corps de base (27) est en forme de C le long de l'axe de rotation (X) et a deux bras (31, 32) opposés se faisant face et espacés le long de l'axe de rotation (X), les bras (31, 32) étant positionnés axialement au-delà des faces (17, 18) respectives opposées sensiblement plates et parallèles de la plaque de couplage (15), de sorte que la plaque de couplage (15) est axialement positionnée entre les bras (31, 32) et **en ce que** la plaque de couplage (15) se compose d'une partie d'un montant latéral (52) de la structure d'installation (42).
